(19) Europäisches Patentamt / European Patent Office / Office européen des brevets

(11) **EP 4 723 626 A1**

(12) **EUROPEAN PATENT APPLICATION**

(43) Date of publication:
08.04.2026 Bulletin 2026/15

(21) Application number: 24306622.2

(22) Date of filing: 03.10.2024

(51) International Patent Classification (IPC):
*H04N 19/117* (2014.01)  *H04N 19/176* (2014.01)
*H04N 19/463* (2014.01)  *H04N 19/82* (2014.01)

(52) Cooperative Patent Classification (CPC):
H04N 19/82; H04N 19/117; H04N 19/176;
H04N 19/463

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• BOISSON, Guillaume
35137 PLEUMELEUC (FR)

• BORDES, Philippe
35890 LAILLE (FR)
• LEFEBVRE, Frederic
35000 RENNES (FR)
• URBAN, Fabrice
35235 THORIGNE-FOUILLARD (FR)
• GALPIN, Franck
35235 THORIGNE-FOUILLARD (FR)

(74) Representative: Interdigital
Immeuble ZEN 2
845 A, avenue des Champs Blancs
35510 Cesson-Sévigné (FR)

(54) **REUSE OF SAO/CCSAO CONTROL INFORMATION**

(57) A method for deriving SAO control information from a previous decoded picture is provided wherein it is determined whether Sample Adaptive Offset (SAO) control information relating to one or more component of at least one block of a current picture of a video is obtained from SAO control information of a previous decoded picture of the video, SAO control information for the at least one block are obtained based on the determining, and the one or more component of the at least one block are filtered based on the obtained SAO control information.

1200

Decode indication of SAO control information — 1210

Obtain SAO control information for a block from a temporal block — 1220

Apply SAO to the block — 1230

**FIG. 12**

EP 4 723 626 A1

**Description**

**BACKGROUND**

The present application is related to video compression. The present embodiments relate to a method and an apparatus for encoding or decoding an image or a video. More particularly, the present embodiments relate to improving SAO/CCSAO signaling in video compression system.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

**BRIEF SUMMARY**

Briefly stated, in one embodiment, a method for deriving SAO control information from a previous decoded picture is provided wherein it is determined whether Sample Adaptive Offset (SAO) control information relating to one or more component of at least one block of a current picture of a video is obtained from SAO control information of a previous decoded picture of the video, SAO control information for the at least one block are obtained based on the determining, and the one or more component of the at least one block are filtered based on the obtained SAO control information.

In another embodiment, a method for encoding or decoding a video is provided wherein it is determined whether Sample Adaptive Offset (SAO) control information relating to one or more component of at least one block of a current picture of a video is obtained from SAO control information of a previous decoded picture of the video, SAO control information for the at least one block are obtained based on the determining, and the one or more component of the at least one block are filtered based on the obtained control information.

In another aspect, an apparatus comprising one or more processors configured to derive SAO control information from a previous decoded picture is provided. The one or more processors are configured to determine whether Sample Adaptive Offset (SAO) control information relating to one or more component of at least one block of a current picture of a video is obtained from SAO control information of a previous decoded picture of the video, obtain SAO control information for the at least one block based on the determining, and filter the one or more component of the at least one block based on the obtained SAO control information. In some embodiments, the apparatus is further configured for encoding or decoding the video. In another aspect, a computer readable storage medium is provided, the medium having stored thereon a bitstream comprising coded data relative to a video and an indication for at least one block of a current picture of the video, the indication indicating that Sample Adaptive Offset (SAO) control information relating to one or more component of the at least one block is obtained from SAO control information of a previous encoded picture.

In another aspect, a non-transitory computer readable medium storing executable program instructions to cause a computer executing the program instructions to perform the method mentioned above according to any one of the embodiments described herein is provided.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure.

FIG. 2 is a block diagram illustrating an example video encoder according to one or more embodiments of the present disclosure;

FIG. 3 is a block diagram illustrating an example video decoder according to one or more embodiments of the present disclosure;

FIG. 4 illustrates an example of loop filters in VVC;

FIG. 5 illustrates an example of additional loop filters implemented in ECM;

FIG. 6 illustrates an example of determination of reconstructed sample category in case of Edge Offset (EO) mode;

FIG. 7 illustrates an example of band split in case of Band Offset (BO) mode, the pixel ranges from 0...255 (in 8-bits) is uniformly split into 32 bands;

FIG. 8 illustrates an example of a modified SAO process when the CCSAO is applied;

FIG. 9 illustrates an example of candidate positions used for the CCSAO classifier;

FIG.10 illustrates an example of four 1-D directional patterns for CCSAO EA sample classification: horizontal (EO class = 0), vertical (EO class=1), 135° diagonal and 45° diagonal;

FIG. 11 illustrates an example of a method for encoding a video according to an embodiment;

FIG. 12 illustrates an example of a method for decoding a video according to an embodiment;

FIG. 13 illustrates an example of a method for decoding a video according to another embodiment;

FIG. 14 illustrates an example of a method for decoding a video according to another embodiment;

FIG. 15 illustrates an example of a method for encoding a video according to another embodiment;

FIG. 16 shows two remote devices communicating over a communication network in accordance with an example of the present principles.

FIG. 17 shows the syntax of a signal in accordance with an example of the present principles.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

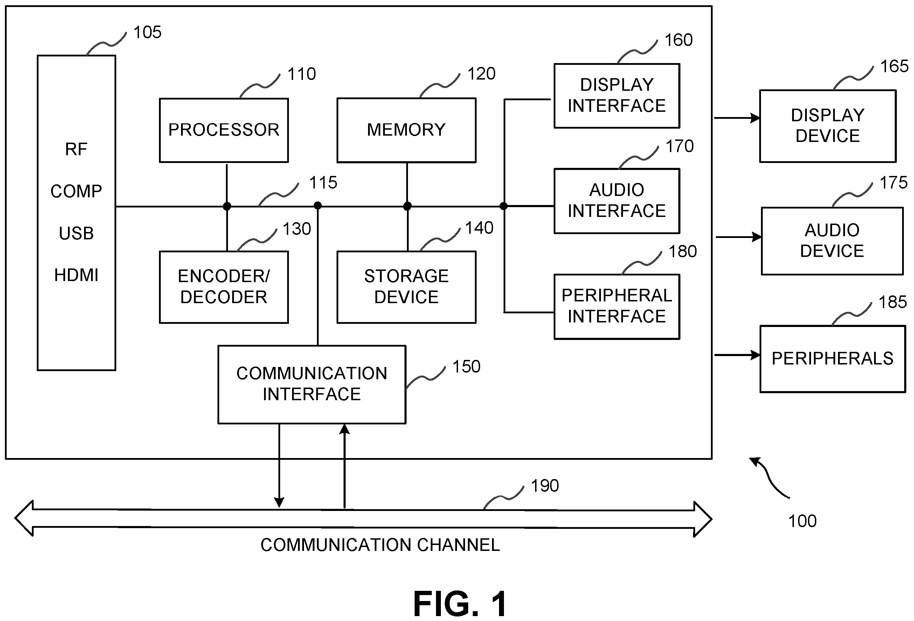

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

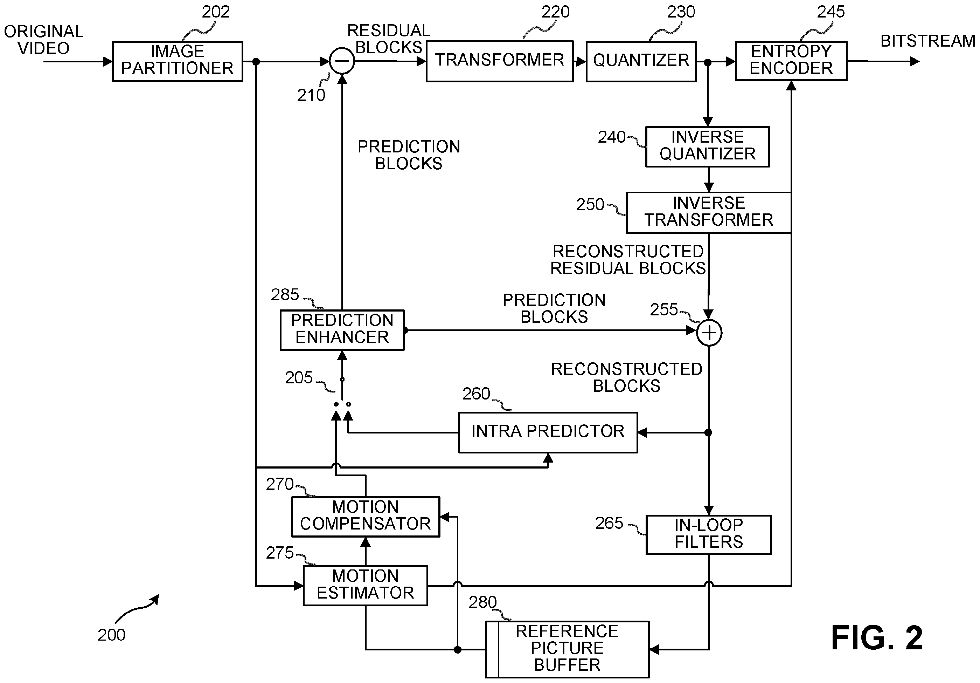

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

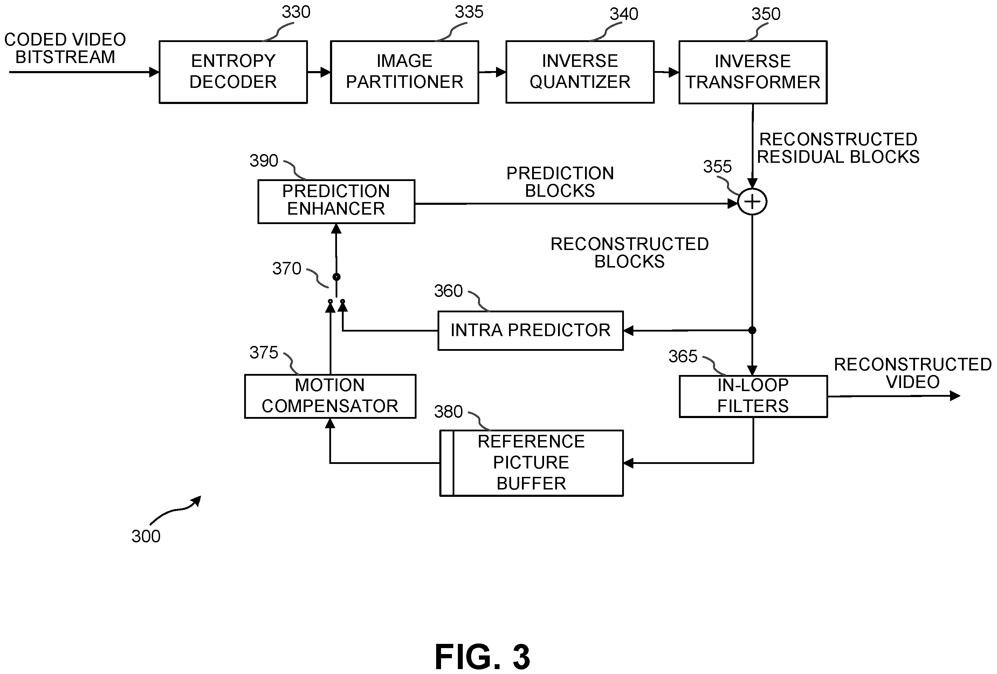

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 can be applied to the reconstructed image (formed by the reconstructed blocks). In-loop filters (265) are applied to the reconstructed picture to perform, for example, deblocking/SAO (Sample Adaptive Offset)/ALF (Adaptive Loop Filter) filtering to reduce encoding artifacts. The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375. The reference picture buffer 380 is also known as decoded pictures buffer, DPB. Note that, for a given picture, the contents of the reference picture buffer 380 on the decoder 300 side is identical to the contents of the reference picture buffer 280 on the encoder 200 side for the same picture.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Embodiments described herein relates more specifically to in-loop filtering, especially SAO and CCSAO (Cross-component SAO).

Block-based intra/inter prediction and transform coding, together with residues quantization, induce a variety of artifacts at medium and low bitrates. In order to reduce those artifacts, video coding standards, such as VVC, and state-of-the-art video coding solutions, such as ECM, implement in-loop filters, such as deblocking filtering (DBF), Bilateral filtering (BIF), Sample-adaptive offset (SAO) and Adaptive loop filtering (ALF).

Deblocking filter (DBF) aims at smoothing discontinuities that may appear along block boundaries. Sample-adaptive offset (SAO) is designed to attenuate artifacts occurring around edges and correct the local average intensity changes (e.g. banding artifacts) with offsets signalled in the bitstream. Bilateral filter (BIF) aims at denoising further reconstructed pictures from artifacts induced from residuals quantization in the Transform domain. Adaptive loop filters (ALF) are determined at encoder side as optimal filters according to a rate-distortion criterion. ALF filters are transmitted along with the bitstream, then retrieved and used at decoder side.

In-loop filters in Versatile Video Coding (VVC)

The VVC standard implements three kinds of in-loop filters: deblocking filter (DBF), Sample-adaptive offset (SAO), and Adaptive loop filter (ALF) as described in M. Karczewicz et al., "VVC In-Loop filters ", in IEEE Transactions on Circuits and Systems for Video Technology, Vol. 31, No 10, October 2021. The deblocking filter aims at reducing blocking discontinuities. Sample-adaptive offset mostly aims at reducing artifacts resulting from the quantization of transform coefficients. Adaptive loop filter and Cross-component adaptive loop filter are adaptive filters enabling to enhance the reconstructed signal, using for instance Wiener-filter encoding approaches.

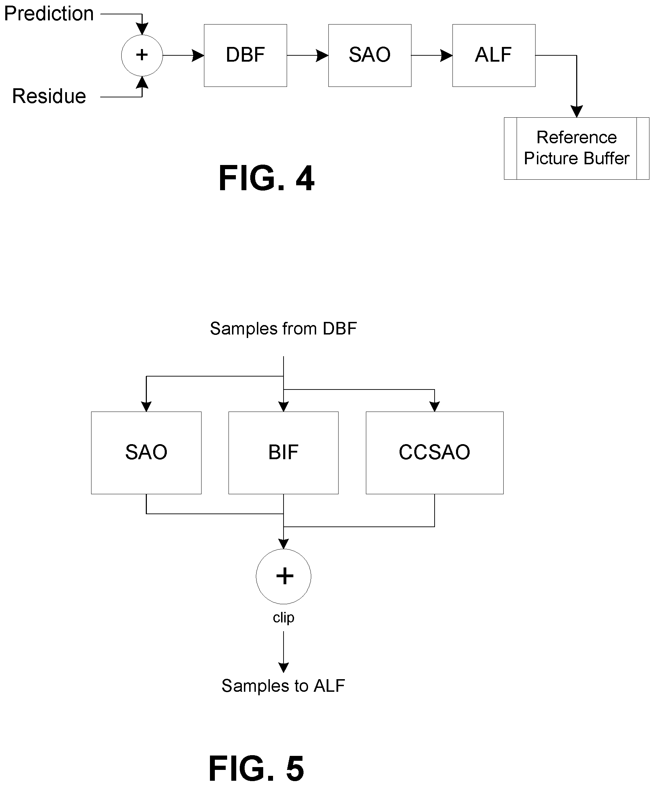

The workflow of VVC in-loop filters is depicted in FIG. 4 (see for example *Algorithm description for Versatile Video Coding and Test Model 11 (VTM 11) JVET-T2002,* §3.7). If local deblocking conditions are met, Luma and Chroma reconstructed samples located along block boundaries are first filtered with deblocking filters (DBF). Then offsets are added locally depending on a classification based on band-classifier or edge-classifier with Sample-adaptive offset (SAO). Eventually, Adaptive-loop filters (ALF) and its variant Cross-component Adaptive loop filters (CCALF) are run before storing the resulting sample values in the Reference Picture buffer.

In-loop filters in ECM

Further loop filters were introduced in Enhanced Compression Model (ECM) software:

- Bilateral filtering (BIF)
- Cross-component Sample adaptive offset (CCSAO)

Both are carried out in the same loop-filter stage as SAO, and, like SAO, use samples from deblocking as input, as shown in FIG. 5. SAO, BIF and CCSAO offsets are computed in parallel, added to the reconstructed samples and jointly clipped, before proceeding to ALF, as shown in FIG. 5.

Sample-adaptive offset (SAO)

Sample-Adaptive Offset (SAO) was adopted in HEVC. The concept of SAO is to reduce mean sample distortion of a region (ex: one CTU) by first classifying the region samples into multiple categories with a selected classifier, obtaining an offset for each category, and then adding the offset to each sample of the category, where the classifier index and the offsets of the region are coded in the bitstream.

In SAO, offsets and parameters are signalled at CTU level.

SAO in HEVC

A thorough description of HEVC SAO can be found in C. -M. Fu et al., "Sample Adaptive Offset in the HEVC Standard," in IEEE Transactions on Circuits and Systems for Video Technology, Vol. 22, No. 12, December 2012.

When enabled, the Coding Tree Unit (CTU) can be coded with 3 SAO modes (SaoTypeIdx): inactive (OFF), Edge Offset (EO) or Band Offset (BO). In case of EO or BO, one set of parameters per channel (Y,U,V) is coded, possibly shared with neighbouring CTUs. The SAO mode is the same for Cb and Cr components.

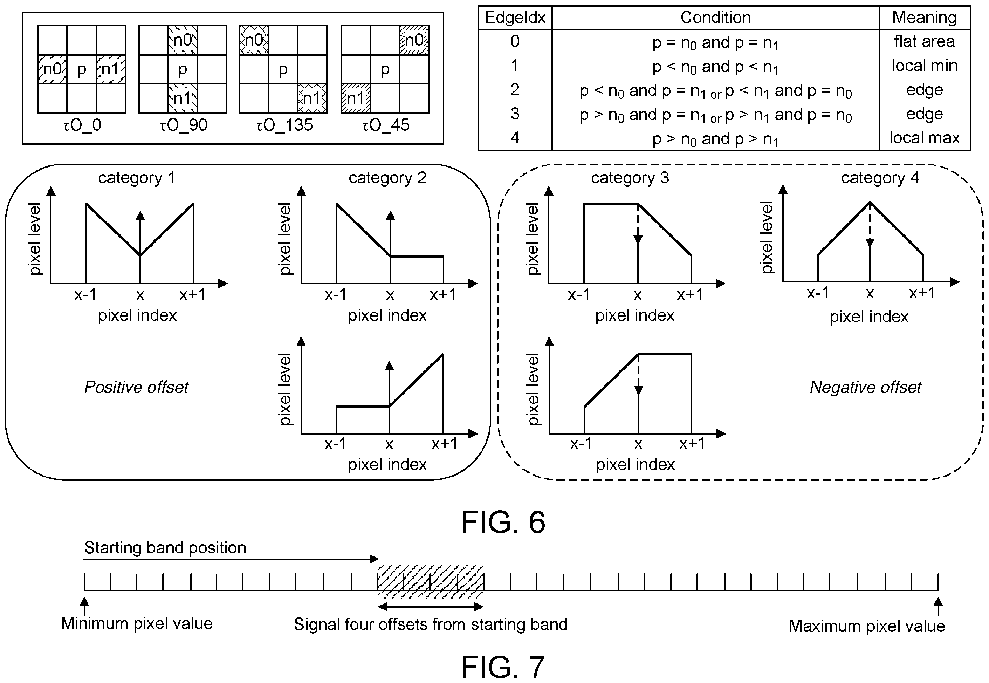

In case of EO, each reconstructed sample is classified into NC=5 categories (sao_eo_class), depending on the local gradients following one direction signalled per CTU (EO_0, EO_90, EO_135 or EO_45 corresponding to directions deg., 90 deg., 135 deg. or 45 deg.), as depicted in FIG. 6. (NC-1) offset values are coded, one for each category (one category has offset equal to zero). The offset sign is implicitly derived from the category.

In case of BO, the sample range of values for component 'c' (ex: 0 to 255, in 8-bits) is uniformly split into N(c)=32 bands and the sample values belonging to (NC-1)=4 consecutive bands are modified by adding an offset, off(n). Figure 4 shows an example of 4 consecutive bands. (NC-1) signed offset values and the starting band are coded, one for each of the (NC-1) bands (the remaining bands have offset equal to zero).

A look-up table (LUT) 'lut$_{SAO}$[c]' containing the offsets for each band is built for each component 'c'. It contains zero except for the NC-1 consecutives that contain offsets to be added to the reconstructed samples:

$$rec_{SAO}[x] = rec[x] + lut_{SAO}[c][\ rec[x] >> s\ ] \quad (1)$$

where rec[x] is the reconstructed samples at position 'x' for the current component(c), before applying SAO, s is equal to (BD(c) - 5) and lut$_{SAO}$[c] contains the offsets for the component 'c', BD(c) is the bit-depth of the component 'c'.

In case of EO or BO, the SAO mode and offsets are possibly not coded but copied from the neighbouring above or left CTU (Merge mode).

The SAO parameters can be transmitted and signalled as follows using VLC encoder/decoder:
In a PPS (Picture Parameter Set), a flag pps_sao_info_in_ph_flag is signaled, where pps_sao_info_in_ph_flag: equal to 1 specifies that SAO filter information could be present in the PH syntax structure and not present in slice headers referring to the PPS that do not contain a PH syntax structure. pps_sao_info_in_ph_flag equal to 0 specifies that SAO filter information is not present in the PH syntax structure and could be present in slice headers referring to the PPS. When not present, the value of pps_sao_info_in_ph_flag is inferred to be equal to 0.

A picture parameter set (PPS) can be defined as a *syntax structure* containing *syntax elements* that apply to zero or more entire *coded pictures* as determined by a *syntax element* found in each *picture header.*

In a SPS (Sequence Parameter Set), a flag sps_sao_enabled_flag is signaled, where sps_sao_enabled_flag equal to 1 specifies that SAO is enabled for the coded layer video sequence. sps_sao_enabled_flag equal to 0 specifies that SAO is disabled for the coded layer video sequence A sequence parameter set (SPS) can be defined as a *syntax structure* containing *syntax elements* that apply to zero or more entire coded layer video sequence as determined by the content of a *syntax element* found in the *PPS* referred to by a *syntax element* found in each *picture header.*

In a Picture Header, if sps_sao_enabled_flag is 1 and pps_sao_info_in_ph_flag is 1, then a flag ph_sao_luma_enabled_flag is signaled and if a Chroma format != 400, a flag ph_sao_chroma_enabled_flag is signaled, where when present, ph_sao_luma_enabled_flag equal to 1 specifies that SAO is enabled for the luma component of the current picture, and ph_sao_luma_enabled_flag equal to 0 specifies that SAO is disabled for the luma component of the current picture. When ph_sao_luma_enabled_flag is not present, it is inferred to be equal to 0 and when present, ph_sao_chroma_enabled_flag equal to 1 specifies that SAO is enabled for the chroma component of the current picture, and ph_sao_chroma_enabled_flag equal to 0 specifies that SAO is disabled for the chroma component of the current picture. When ph_sao_chroma_enabled_flag is not present, it is inferred to be equal to 0.

In a Slice Header, if pps_sao_info_in_ph_flag is 1 and sps_sao_enabled_flag is 0, a flag slice_sao_luma_flag is signaled and if chroma is enabled, a flag slice_sao_chroma_flag is signaled, where slice_sao_luma_flag equal to 1 specifies that SAO is used for the luma component in the current slice. slice_sao_luma_flag equal to 0 specifies that SAO is not used for the luma component in the current slice and slice_sao_chroma_flag equal to 1 specifies that SAO is used for the chroma component in the current slice. slice_sao_chroma_flag equal to 0 specifies that SAO is not used for the chroma component in the current slice.

The SAO parameters can be transmitted and signalled as follows using CABAC encoder/decoder.

For a Coding Tree unit, if both slice_sao_luma_flag is 0 and slice_sao_chroma_flag is 0 or if sps_sao_enabled_flag is 0, no need for SAO parameters decoding.

Otherwise, for each CTU, a sao_merge_type is decoded, then sao_merge_left_flag and sao_merge_up_flag are derived accordingly, where sao_merge_type specifies the merge mode of the CTU, sao_merge_left_flag equal to 1 specifies that the syntax elements sao_type_idx_luma, sao_type_idx_chroma, sao_band_position, sao_eo_class_luma, sao_eo_class_chroma, sao_offset_abs and sao_offset_sign_flag are derived from the corresponding syntax elements of the left CTB. sao_merge_left_flag equal to 0 specifies that these syntax elements are not derived from the corresponding syntax elements of the left CTB. When sao_merge_leftflag is not present, it is inferred to be equal to 0 and sao_merge_up_flag equal to 1 specifies that the syntax elements sao_type_idx_luma, sao_type_idx_chroma, sao_band_position, sao_eo_class_luma, sao_eo_class_chroma, sao_offset_abs and sao_offset_sign_flag are derived from the corresponding syntax elements of the above CTB. sao_merge_up_flag equal to 0 specifies that these syntax elements are not derived from the corresponding syntax elements of the above CTB. When sao_merge_up_flag is not present, it is inferred to be equal to 0.

If sao_merge_left_flag is 0 and sao_merge_up_flag is 0 (no merge mode is used for the CTU, then for each component Y/Cb/Cr of the CTU, a modelc and typeIDc are decoded for Y and Cb, where modeIdc specifies the CTU SAO mode : a new SAO mode (SAO_MODE_NEW) with Band or edge offset or no offset (SAO_MODE_OFF), typeIdc specifies the SAO type: edge offset (SAO_TYPE_EO) or band offset (SAO_TYPE_BO). In case of edge offset, it specifies also the edge class (SAO_CLASS_EO_0, SAO_CLASS_EO_90, SAO_CLASS_EO_135, SAO_CLASS_EO_45).

If the SAO mode type for the CTU is not SAO_MODE_OFF, syntax elements sao_offset_abs are decoded where sao_offset_abs specifies the offset values for the CTB for the colour component.

If the SAO mode type for the CTU is SAO_TYPE_BO, syntax elements sao_offset_sign_flag and sao_band_position are decoded where sao_offset_sign _flag specifies the sign of the offset value for the CTB and sao_band_position specifies the displacement of the band offset.

Cross-component Sample-adaptive offset (CCSAO)

Cross-component Sample Adaptive Offset (CCSAO) was proposed in C.-W. Kuo et al., "AHG12: Cross-component Sample Adaptive Offset, JVET-V0153", adopted in ECM-3 then refined in ECM-4 described in *"Algorithm description of Enhanced Compression Model 4 (ECM 4, JVET-Y2025"*.

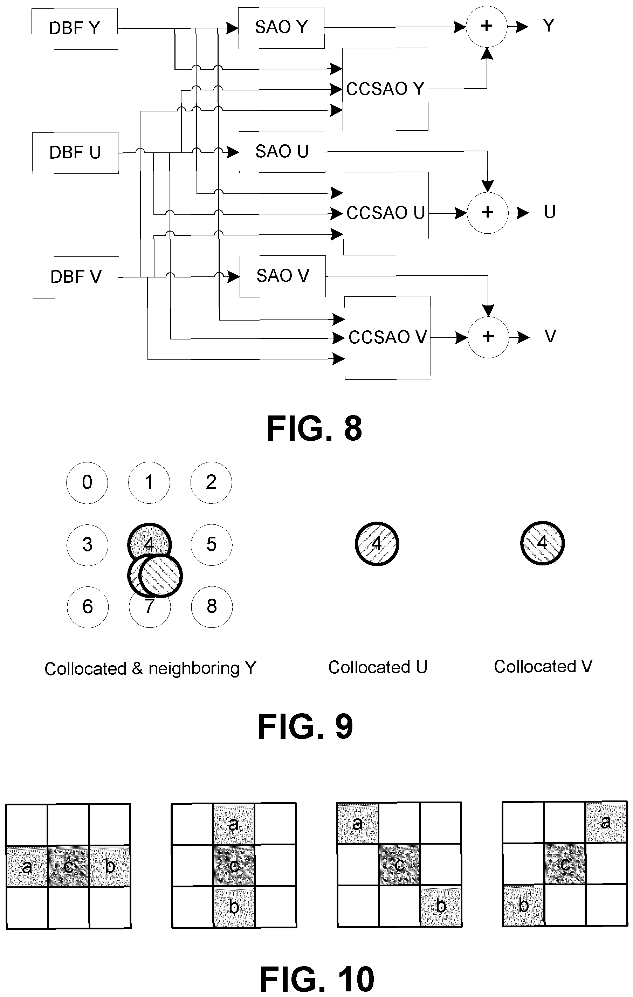

CCSAO is used to refine reconstructed chroma samples. Similarly to SAO, the CCSAO classifies the reconstructed samples into different categories, derives one offset for each category and adds the offset to the reconstructed samples in that category. However, different from SAO which only uses one single luma/chroma component of current sample as input, the CCSAO utilizes all three components to classify the current sample into different categories. To facilitate the parallel processing, the output samples from the de-blocking filter are used as the input of the CCSAO. FIG. 8 shows the diagram of the decoding workflow when the CCSAO is applied.

In CCSAO, only BO is used to enhance the quality of the reconstructed samples. For a given luma/chroma sample, three candidate samples are selected to classify the given sample into different categories: one collocated Y sample, one collocated U sample, and one collocated V sample. The sample values of these three selected samples are then classified into three different bands {$band_Y$, $band_U$, $band_V$}, and a joint index $i$ represents the category of the given sample. One offset is signaled and added to the reconstructed samples that fall into that category, which can be formulated as:

$$band_Y = (Y_{col} \cdot N_Y) \gg BD$$

$$band_U = (U_{col} \cdot N_U) \gg BD$$

$$band_V = (V_{col} \cdot N_V) \gg BD$$

$$i = band_Y \cdot (N_U \cdot N_V) + band_U \cdot N_V + band_V$$

$$C'_{rec} = Clip1(C_{rec} + \sigma_{CCSAO}[i])$$

where {$Y_{col}$, $U_{col}$, $V_{col}$} are the three selected collocated samples used to classify current sample; {$N_Y$, $N_U$, $N_V$} are the numbers of equally divided bands applied to {$Y_{col}$, $U_{col}$, $V_{col}$} full range respectively; $BD$ is the internal coding bit-depth; $C_{rec}$ and $C'_{rec}$ are the reconstructed samples before and after the CCSAO is applied; $\sigma_{CCSAO}[i]$ is the value of the CCSAO offset applied to i-th BO category. The collocated luma sample can be chosen from 9 candidate positions, while the collocated chroma sample positions are fixed, as depicted in FIG. 9.

Similar to SAO, different classifiers can be applied to different local region to further enhance the whole picture quality. The parameters for each classifier (i.e., the position of $Y_{col}$, $N_Y$, $N_U$, $N_V$, and offsets) are signaled at picture level, and the classifier to be used is explicitly signaled and switched at CTB level. For each classifier, the maximum of {$N_Y$, $N_U$, $N_V$} is set to {16, 4, 4}, and offsets are constrained to be within the range [-15, 15]. At most 4 classifiers are used per frame.

Similar to the edge classifier of SAO in VVC the edge-based classifier of CCSAO also uses the four 1-D directional patterns for sample classification: horizontal, vertical, 135° diagonal and 45° diagonal, as shown in FIG. 10.

For every 1-D pattern, each sample is classified based on the sample difference between the luma sample value labelled as "c" and its two neighbour luma samples labelled as "a" and "b" along the selected 1-D pattern.

Similar to SAO, the encoder may decide the best 1-D directional pattern using the rate-distortion optimization (RDO) and signal this additional information in each classifier/set. Both the sample differences "a-c" and "b-c" are compared against a pre-defined threshold value (Th) to derive the final "class_idx" information.

The encoder selects the best "Th" value from an array of pre-defined threshold values based on RDO and the index into the "Th" array is signalled.

Furthermore, an additional difference between CCSAO edge-based classifier and the SAO edge classifier in VVC is that, in the former, Chroma samples use the co-located Luma samples for deriving the edge information (samples "a", "c" and "b" are the co-located luma samples) whereas, in the later Chroma samples use its own neighbouring samples for deriving the edge information.

The Edge-based classifier process is formulated as follows:

$$Ea=(a-c<0)? (a-c<(-Th)? 0:1) : (a-c<(Th)? 2:3) \qquad (1)$$

$$Eb=(b-c<0)? (b-c<(-Th)? 0:1) : (b-c<(Th)? 2:3) \qquad (2)$$

$$class\_idx = i_B * 16 + Ea * 4 + Eb \qquad (3)$$

$$C'_{rec} = Clip1(C_{rec} + \sigma_{CCSAO}[class\_idx]) \qquad (4)$$

variable "$i_B$" in equation (3) is derived as follows.

$$i_B = (cur \cdot N_{cur}) \gg BD \ \ (or) \ i_B = (col1 \cdot N_{col1}) \gg BD \ \ (or) \ i_B = (col2 \cdot N_{col2}) \gg BD$$

$$(5)$$

wherein, sample "cur" is the current sample being processed, *col*1 *and col*2 are the co-located samples. When Luma samples are processed, *col1 and col*2 are the co-located $C_b$ and $C_r$ samples respectively. When Chroma($C_b$) samples are processed, *col*1 *and col*2 are the co-located Y and$C_r$samples respectively. Similarly, When Chroma($C_r$) samples are processed, *col*1 *and col*2 are the co-located $Y$ and $C_b$ samples respectively.

Based on RDO, encoder signals one among the samples "cur", "*col*1", "*col*2" used in deriving the band information.

In an initial version of CCSAO, offsets and parameters are transmitted and signalled as follows. Using a VLC encoder/decoder:

In a SPS, a flag sps_ccsao_enabled_flag is signaled where sps_ccsao_enabled_flag specifies that SPS CCSAO is enabled.

In a picture header, if sps_ccsao_enabled_flag && SAO Info in Picture Header Flag, the flags ph_cc_sao_y_enabled_flag, ph_cc_sao_cr_enabled_flag, ph_cc_sao_cb_enabled_flag are signaled where ph_cc_sao_y_enabled_flag specifies that Picture Header CCSAO is enabled in Luma, ph_cc_sao_cr_enabled_flag specifies that Picture Header CCSAO is enables in Cr and ph_cc_sao_cb_enabled_flag specifies that Picture Header CCSAO is enables in Cb.

In the slice header, if sps_ccsao_enabled_flag enabled, the flags slice_ccsao_y_enabled_flag, slice_ccsao_cr_enabled_flag, slice_ccsao_cb_enabled_flag are signaled where slice_ccsao_y_enabled_flag specifies that Slice CCSAO is enabled in Y, slice_ccsao_cr_enabled_flag specifies that Slice CCSAO is enabled in Cr and slice_ccsao_cb_enabled_flag specifies that Slice CCSAO is enabled in Cb.

For each component Y,Cr,Cb, if slice_ccsao_y/cr/cb_enabled_flag, a syntax element ccsao_set_num is signaled with ccsao_set_num being the number of sets enabled. A maximum number of sets is set to MAX_CCSAO_SET_NUM=4.

For each set having setIdx < ccsao_set_num, the following syntax elements are read:

setType[setIdx] Flag where setType specifies that offset type is Edge or Band for the set setIdx,
if setType[setIdx]=edge, then the syntax elements ccsao_cand_pos_y, ccsao_band_num_y and ccsao_band_num_c are read where ccsao_cand_pos_y specifies the best candidate position y among the 9 positions, ccsao_band_num_y specifies the band Luma, ccsao_band_num_c specifies the band chroma (Cb). Otherwise (setType[setIdx] is not edge), then the syntax elements ccsao_cand_pos_y, ccsao_band_num_y, ccsao_band_num_u, ccsao_band_num_v, ccsao_offset_abs and ccsao_offset_sign are read where ccsao_band_num_u specifies the band Cb, ccsao_band_num_v specifies the band Cr, ccsao_offset_abs specifies the absolute values of offset and ccsao_offset_sign specifies sign of the value of offset.

For a Coding Tree unit (CTU), for each component Y,Cb,Cr, if SAO is not skipped and if CCSAO is enabled for the component of the current slice, which set of CCSAO offsets and parameters shall be used is determined. To do so, a set index idcVal is decoded. A first bit is decoded as idcVal, then if idc Val > 0, a further bit is decoded and idcVal is accordingly incremented. The decoded syntax element idcVal is then the index indicating which set of CCSAO offsets and parameters is used for the CTU.

History-based CCSAO

It has been proposed in ″C.-W. Kuo et al., "AHG12: CCSAO with extended edge classifiers and history offsets, JVET-AD0218″ to store the offsets/parameters of the current frame in a way similar to the APS design in VVC. In this method, an index is signalled in the slice header to indicate which set of stored offsets/parameters is inherited in the current slice.

Reuse of ALF control information

It has been proposed in M. Karczewicz etal., "Non-EE2: Reuse of ALF control information, JVET-AI0280″ that ALF control information, including on/off decision and ALF APS usage information, may be reused from a previously encoded picture.
At encoder side, ALF filters are derived for a set of non-reference pictures which share the ALF on/off decision.

Example of GOP prediction structure

The following table provides an example of GOP temporal prediction structure for a size of 32. The first column indicates the order in which pictures are encoded and decoded. The second column indicates each picture's order count (POC), that is, its position in the video stream. The third column shows each picture's temporal id (Tid), that indicates its level in the hierarchical temporal prediction structure. Tid is also referred in the document as temporal level. Fourth and fifth columns are L0 and L1 prediction lists, respectively. In addition to POC offsets, reference POCs are provided between parenthesis.

**Table 1: Example of prediction reference settings (L0 and L1 lists) for a group of 32 frames**

| Picture coding order | POC | Tid | L0 list reference POC offset (ref POC) | | | | L1 list reference POC offset (ref POC) | | | | |
|---|---|---|---|---|---|---|---|---|---|---|---|
| 0 | 0 | 0 | (intra) | | | | | | | | |
| 1 | 32 | 0 | 32 (0) | | | | 32 (0) | | | | |
| 2 | 16 | 1 | 16 (0) | | | | -16 (32) | | | | |
| 3 | 8 | 2 | 8 (0) | | | | -8 (16) | -24 (32) | | | |
| 4 | 4 | 3 | 4 (0) | | | | -4 (8) | -12 (16) | -28 (32) | | |
| 5 | 2 | 4 | 2 (0) | | | | -2 (4) | -6 (8) | -14 (16) | -30 (32) | |
| 6 | 1 | 5 | 1 (0) | | | | -1 (2) | -3 (4) | -7 (8) | -15 (16) | -31 (32) |
| 7 | 3 | 5 | 1 (2) | 3 (0) | | | -1 (4) | -5 (8) | -13 (16) | -29 (32) | |
| 8 | 6 | 4 | 2 (4) | 4 (2) | 6 (0) | | -2 (8) | -10 (16) | -26 (32) | | |
| 9 | 5 | 5 | 1 (4) | 5 (0) | | | -1 (6) | -3 (8) | -11 (16) | -27 (32) | |
| 10 | 7 | 5 | 1 (6) | 3 (4) | 7 (0) | | -1 (8) | -9 (16) | -25 (32) | | |
| 11 | 12 | 3 | 4 (8) | 8 (4) | 12 (0) | 6 (6) | -4 (16) | -20 (32) | | | |
| 12 | 10 | 4 | 2 (8) | 4 (6) | 6 (4) | 10 (0) | -2 (12) | -6 (16) | -22 (32) | | |

(continued)

| Picture coding order | POC | Tid | L0 list reference POC offset (ref POC) | | | | | L1 list reference POC offset (ref POC) | | | |
|---|---|---|---|---|---|---|---|---|---|---|---|
| 13 | 9 | 5 | 1 (8) | 5 (4) | 9 (0) | | | -1 (10) | -3 (12) | -7 (16) | -23 (32) |
| 14 | 11 | 5 | 1 (10) | 3 (8) | 11 (0) | | | -1 (12) | -5 (16) | -21 (32) | |
| 15 | 14 | 4 | 2 (12) | 4 (10) | 6 (8) | 14 (0) | | -2 (16) | -18 (32) | | |
| 16 | 13 | 5 | 1 (12) | 5 (8) | 13 (0) | | | -1 (14) | -3 (16) | -19 (32) | |
| 17 | 15 | 5 | 1 (14) | 3 (12) | 7 (8) | 15 (0) | | -1 (16) | -17 (32) | | |
| 18 | 24 | 2 | 8 (16) | 16 (8) | 24 (0) | | | -8 (32) | | | |
| 19 | 20 | 3 | 4 (16) | 12 (8) | 20 (0) | | | -4 (24) | -12 (32) | | |
| 20 | 18 | 4 | 2 (16) | 10 (8) | 18 (0) | | | -2 (20) | -6 (24) | -14 (32) | |
| 21 | 17 | 5 | 1 (16) | 9 (8) | 17 (0) | | | -1 (18) | -3 (20) | -7 (24) | -15 (32) |
| 22 | 19 | 5 | 1 (18) | 3 (16) | 19 (0) | | | -1 (20) | -5 (24) | -13 (32) | |
| 23 | 22 | 4 | 2 (20) | 6 (16) | 22 (0) | | | -2 (24) | -10 (32) | 4 (18) | |
| 24 | 21 | 5 | 1 (20) | 5 (16) | 21 (0) | | | -1 (22) | -3 (24) | -11 (32) | |
| 25 | 23 | 5 | 1 (22) | 3 (20) | 7 (16) | 23 (0) | | -1 (24) | -9 (32) | | |
| 26 | 28 | 3 | 4 (24) | 8 (20) | 12 (16) | 28 (0) | | -4 (32) | | | |
| 27 | 26 | 4 | 2 (24) | 6 (20) | 10 (16) | 26 (0) | | -2 (28) | -6 (32) | | |
| 28 | 25 | 5 | 1 (24) | 5 (20) | 9 (16) | 25 (0) | | -1 (26) | -3 (28) | -7 (32) | |
| 29 | 27 | 5 | 1 (26) | 3 (24) | 11 (16) | 27 (0) | | -1 (28) | -5 (32) | | |
| 30 | 30 | 4 | 2 (28) | 6 (24) | 14 (16) | 30 (0) | | -2 (32) | | | |
| 31 | 29 | 5 | 1 (28) | 5 (24) | 13 (16) | 29 (0) | | -1 (30) | -3 (32) | | |
| 32 | 31 | 5 | 1 (30) | 3 (28) | 7 (24) | 15 (16) | 31 (0) | -1 (32) | | | |
| 33 | 64 | 0 | 32 (32) | 64 (0) | 48 (16) | 40 (24) | 36 (28) | 32 (32) | 48 (16) | | |
| 34 | 48 | 1 | 16 (32) | 32 (16) | 48 (0) | 24 (24) | 20 (28) | -16 (64) | | | |
| 35 | 40 | 2 | 8 (32) | 24 (16) | 16 (24) | 40 (0) | 12 (28) | -8 (48) | -24 (64) | | |
| 36 | 36 | 3 | 4 (32) | 8 (28) | 20 (16) | | | -4 (40) | -12 (48) | -28 (64) | |
| 37 | 34 | 4 | 2 (32) | 6 (28) | 18 (16) | | | -2 (36) | -6 (40) | -14 (48) | -30 (64) |

As described above, SAO and CCSAO rely on the transmission of control information in the bitstream, such as flags, indices, positions, offsets and signs. Coding those control information has a cost, that mitigates the potential gains of SAO/CCSAO.

Embodiments described herein provide for reusing SAO/CCSAO control information from a picture to another, in order to reduce coding cost. SAO control information for a block of a current picture is thus obtained from a block of a previous decoded picture. Such a block is named in the following a temporal block. In an embodiment, a temporal extension of the SAO merge mode is provided.

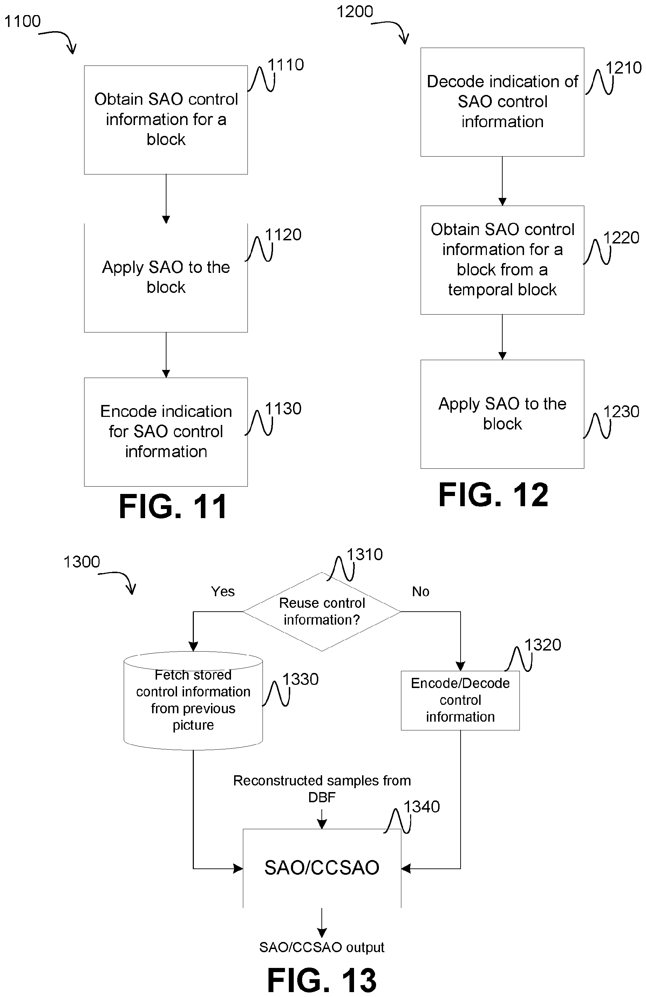

FIG. 11 illustrates an example of a method 1100 for encoding a video according to an embodiment. The video is for example encoded according to the method described in relation with FIG. 2 where SAO or CCSAO process are applied as follows. At 1110, SAO control information for a block of a current picture being encoded is obtained. SAO control information can be obtained by determining SAO parameters for the block or by using SAO control information from a spatial neighbor of the block (merge mode,) or from SAO control information used from a previous decoded picture. At 1120, SAO or CCSAO is applied to the block using the control SAO information obtained at 1110. In other words, one or more components of the block are filtered based on the obtained SAO control information. At 1130, an indication is signaled in the bitstream to indicate whether SAO control information is obtained from a previous decoded picture. Depending on variants described below, the indication can be signaled at different levels. For example, the indication can be signaled once for all block of the current picture (at picture level) or per block or group of blocks of the picture (at CTU or block level), or any combination of these variants.

FIG. 12 illustrates an example of a method 1200 for decoding a video according to an embodiment. The video is for example decoded according to the method described in relation with FIG. 3 where SAO or CCSAO process are applied as follows. At 1210, an indication is decoded that indicates whether SAO control information is obtained from a previous decoded picture. Depending on variants described further below, the indication can be signaled at different levels. For example, the indication can be signaled once for all block of the current picture (at picture level) or per block or group of blocks of the picture (at CTU or block level), or any combination of these variants.

At 1220, SAO control information for a block of a current picture being encoded is obtained based on the decoded indication. At 1230, SAO or CCSAO is applied to the block using the control SAO information obtained at 1220. In other words, one or more components of the block are filtered based on the obtained SAO control information.

FIG. 13 illustrates another embodiment of a video encoding method or a video decoding method 1300. The video is encoded or decoded for example according to the method described in relation with FIG. 2 or FIG. 3, where SAO or CCSAO process are applied as follows. At 1310, it is determined whether SAO control information from a previous decoded picture is reused. For example, this determination can be based on an indication signaled in the bitstream. For example, the indication is a flag signaled at picture/slice level for non-reference pictures. This flag, named Reuse flag in the following, specifies that SAO/CCSAO control information is reused from a previously decoded picture. In another variant, this determination can be based on whether the current picture being encoded/decoded is a non-reference picture. For example, if the current picture is a non-reference picture, SAO control information for blocks of the current picture is obtained from SAO control information of a previous decoded picture.

If it is determined at 1310 that SAO control information from a previous decoded picture is reused, then at 1330, SAO control information for a current block is obtained from stored SAO control information from previous picture. For example, for a current block of the current picture, SAO control information of a collocated block in the previous decoded picture is obtained and used for the current block.

If it is determined at 1310 that SAO control information from a previous decoded picture is not reused, then at 1320, SAO control information is decoded for the current block.

At 1340, SAO/CCSAO process is applied to the current block based on the SAO control information obtained at 1320 or 1330. That is, reconstructed samples from the DBF are filtered using the SAO/CCSAO parameters to output the filtered reconstructed samples.

In the document, the terms SAO control information refers to any SAO or CCSAO control information, such as SAO/CCSAO flags, indices, positions, offsets absolute values and signs as described above when describing the signalling in the HEVC, VVC or ECM system. More generally, the SAO control information refers to one or more parameters that is used in the SAO/CCSAO process for filtering the reconstructed samples of a current block.

In a variant, embodiments described herein can be implemented for SAO/CCSAO only when the current picture to which SAO/CCSAO is applied is a non-reference frame, i.e. a frame that is not used as a reference picture for the encoding of subsequent pictures (i.e. frame whose POC does not appear in lists L0 and L1 in Table 1). This limitation advantageously limits the latency induced at encoder side. As an example, for GOP of 32 frames, those non-reference pictures can correspond to POCs #1, 3, 5, 7, 9, 11, 13, 15, 17, 19, 21, 23, 25, 27, 29, 31. In this variant, the embodiments can be implemented for SAO/CCSAO for all of those non-reference frames, or only a subset of those non-reference frames.

In an embodiment, a flag is signalled at picture/slice level for the non-reference pictures, to specify whether the current picture/slice shall reuse SAO/CCSAO control information from a previously decoded frame. Said previously decoded frame can for instance be the previous non-reference decoded frame. In a variant, said previous decoded frame has a temporal level Tid lower than or equal to the temporal level of the current picture. For example, if the previous decoded frame (in decoding order) has a higher Tid than the temporal of the current picture, the previous decoded frame is skipped and the frame before the previous decoded frame is considered. In contrast with a solution based on a list of control parameter sets (e.g. a list of Adaptation Parameter Sets (APS)) as in *JVET-AD0218*, this advantageously limits the decoder memory footprint: only one set of control information is stored.

In another variant, the embodiments described herein can be implemented for SAO/CCSAO whether the current picture is a non-reference frame or not.

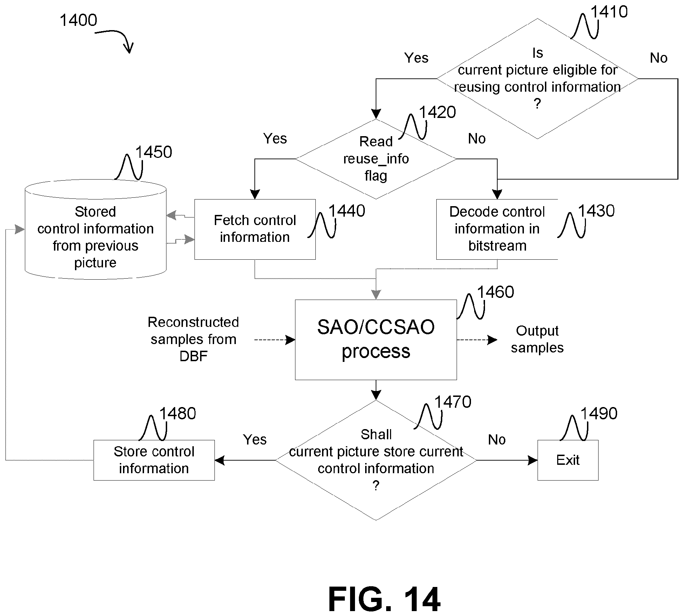

An embodiment of decoder implementation 1400 is depicted in FIG. 14. Solid black arrows indicate the functional workflow, dotted black arrows denotes input and output samples, while grey arrows denote control information. At 1410, it is checked whether the current picture is eligible for reusing SAO control information. For example, the current picture is eligible for reusing SAO control information if the current picture is a non-reference frame. In another example, the current picture is eligible for reusing SAO control information if there exists a previous decoded picture that has a temporal level lower than or equals to the temporal level of the current picture. If at 1410, it is determined that the current picture is not eligible for reusing SAO control information, then the process goes to 1430. Otherwise, at 1420, a flag "Reuse flag" is read indicating whether SAO control information for the current picture is obtained from a previous decoded picture. If the flag indicates that SAO control information for the current picture is not obtained from a previous decoded picture, then the process goes to 1430 where SAO control information is decoded from the bitstream for blocks of the current picture. Otherwise, at 1440, for each block of the current picture, SAO control information is obtained from the SAO control information of the previous decoded picture stored (1450). For example, for a current block, SAO control information of the collocated block of the current block is used. At 1460, SAO/CCSAO process is applied to the reconstructed samples from the DBF to output the filtered samples, using the SAO control information obtained for the block. At 1470, it is determined whether SAO control information used for the blocks of the current picture shall be stored. For example, SAO control information of the current picture is stored if the current picture is a reference frame. In another example, SAO control information of the current picture is stored if the temporal level of the current picture is lower than or equals a given temporal level. If it is determined that SAO control information of the current picture shall be stored, then at 1480 this information is stored, otherwise the process exits without storing this information (1490).

Another embodiment provides for temporal sao_merge_modes. In this embodiment, new temporal sao_merge_modes are introduced in addition to spatial merge modes. The temporal merge modes can include any one of the following modes:

- sao_merge_temporal_collocated: where SAO control information is obtained from a collocated block in the previous decoded picture,
- sao_merge_temporal_top: where SAO control information is obtained from a block above the collocated block in the previous decoded picture,
- sao_merge_temporal_left: where SAO control information is obtained from a block at the left the collocated block in the previous decoded picture,
- sao_merge_temporal_bottom: where SAO control information is obtained from a block below the collocated block in the previous decoded picture,
- sao_merge_temporal_right: where SAO control information is obtained from a block at the right the collocated block in the previous decoded picture,
- sao_merge_temporal_topleft: where SAO control information is obtained from a block located top left of the collocated block in the previous decoded picture,
- sao_merge_temporal_topright: where SAO control information is obtained from a block located top right of the collocated block in the previous decoded picture,
- sao_merge_temporal_bottomleft: where SAO control information is obtained from a block located bottom left of the collocated block in the previous decoded picture,
- sao_merge_temporal_bottomright; where SAO control information is obtained from a block located bottom right of the collocated block in the previous decoded picture,

The temporal merge mode used for a current CTU is signaled to indicate whether the current CTU uses SAO control information from collocated CTU or top, left, bottom, right, top-left, top-right, bottom-left, or bottom-right neighbour CTU from the previous decoded picture.

In a variant, the temporal merge mode can be signaled using new temporal sao_merge_temporal_CTUidx which specify a CTU index, that indicates which CTU of the previous decoded picture is used to provide SAO control information for the current CTU.

In another variant, the SAO control information of the temporal merge modes is used to derive a list of SAO candidates, and an index is signaled for the current CTU to indicate which SAO candidates is used for the current CTU.

In another variant, sao_merge_temporal_<refIdx>_<CTUpos> modes specify a frame index refIdx that indicates the reference frame to pick among the lists of reference frames, and a CTU position CTUpos in the reference frame refIdx. The CTU position CTUpos can be either relative to the current CTU (e.g. among top, left, right, bottom, top-left, top-right, bottom-left, bottom-right), or a plain CTU index CTUidx in the reference frame.

The same mechanism as described with FIG. 14 can be implemented with this embodiment. In FIG. 14 rather than reading a flag for the current picture at 1420, an indication of SAO control information is read for each CTU, for example the temporal merge mode as signaled in any variants described above.

Combination of Reuse flag and temporal merge modes

In a variant, only Reuse flags are signalled, and the CTU position of the SAO control information to reuse is derived consistently at encoder and decoder side (e.g., the collocated CTU). This corresponds to the embodiment described in reference to FIG. 13 or FIG. 14.

In another variant, no Reuse flag is signalled, and temporal merge modes are used in non-reference frames/-slices. For example, the temporal SAO merge mode for a CTU is signaled as described above.

In a further other variant, temporal SAO merge modes are used in non-reference frames/slices only if the Reuse flag is equal to 1 for that particular frame/slice. In this variant, an indication (Reuse flag) is decoded at picture/slice level to indicate whether or not the current picture uses SAO control information from previous decoded picture, and if the indication indicates that the current picture uses SAO control information from previous decoded picture, then another indication signalling the temporal SAO merge mode for a CTU is signaled at CTU level.

Combination of Reuse flag and spatial merge modes

As explained above, the SAO control information inherited from a block or CTU of a previous decoded picture includes any of the SAO parameters used for this block or CTU. This SAO control information can thus include the spatial sao_merge modes (up and left) such as the *sao_merge_left_flag* and *sao_merge_top_flag.*

In a variant, the spatial sao_merge_modes (up and left) are excluded from the SAO control information that is derived from previous decoded frame. The spatial sao_merge_flags are therefore signalled for each CTU. In this case, after a frame is reconstructed, all the SAO class type (ex: edge, band...) and associated offsets used by each CTU have to be stored. Then one subsequent frame may use these previous collocated SAO parameters for non spatial merge SAO CTUs and rely on the signalled merge flags for the SAO merge CTUs.

In a further variant, the spatial SAO merge modes can be signaled with the temporal SAO merge modes wherein a SAO candidate list is derived for a CTU that can include the two spatial SAO merge modes and the one or more temporal SAO merge modes mentioned above and an index indicating an SAO candidate in the list to use for the CTU is signaled.

In another variant, spatial sao_mergeflags (up and left) are part of the SAO control information derived from collocated CTUs of previous decoded frame. They therefore do not need to be signalled. In this case, if a current CTU of a current picture inherits one of *sao_merge_left_flag* or *sao_merge_top_flag* from a collocated CTU in a previous decoded frame with a value 1, the SAO control parameters to use for the filtering (EO type, EO class, BO starting band, offsets.. ) are the ones of the left or top CTU of the current picture.

Encoder design

At encoder side, for each frame except the first one, the encoder decides whether it is preferrable (in rate-distortion sense) to reuse SAO/CCSAO control information from a decoded previous frame or to signal new SAO/CCSAO control information. In a variant, this is done only for non-reference frames.

In another embodiment, multiple-frame SAO/CCSAO optimization is provided at the encoder. This embodiment uses sets of non-reference frames. The encoder stores a plurality of reconstructed non-reference pictures/slices after deblocking, before proceeding with further loop filters such as SAO, CCSAO, ALF and CCALF.

In a variant, that plurality of reconstructed non-reference frames can consist in every non-reference frame of the GOP. In another variant, the encoder can proceed successively per temporal subset, e.g. with two subsets of half the GOP's non-reference frames. As an example, in a GOP of 32 frames, a first subset can consist of POCs #1, 3, 5, 7, 9, 11, 13, 15, and a second subset can consist of POCs #17, 19, 21, 23, 25, 27, 29, 31.

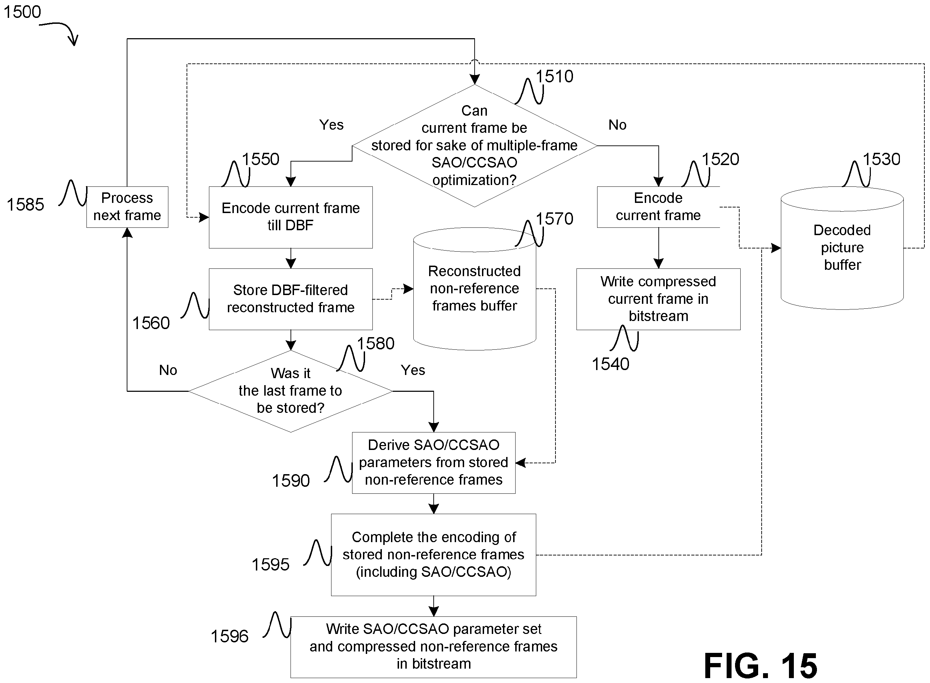

In this embodiment, offsets are calculated using samples from several frames. From the plurality of reconstructed frames stored, the encoder computes optimal offsets considering (all the) samples from different frames of the plurality, as depicted in method 1500 illustrated on FIG. 15. Solid arrows indicate the functional workflow while dotted arrows depict stored frames. At 1510, it is determined if the current frame has to be stored for sake of multiple-frame SAO/CCSA optimization. If no, then at 1520, the current frame is encoded and at 1540 the compressed current frame is written in the bitstream. Its reconstructed version is stored in the decoded picture buffer (1530). If yes at 1510, then at 1550, the current frame is encoded until the DBF process. At 1560, the DBF-filtered reconstructed frame is stored in the reconstructed non-reference frames buffer (1570). At 1580, it is checked whether the current frame is the last frame to be stored or not. If no, the next frame is processed at 1585, and the process goes to 1510 with the next frame becoming the current frame. Otherwise (yes at 1580), at 1590, the SAO/CCSAO parameters are derived from the stored non-reference frames (1570) and at 1595, the encoding of the stored non-reference frames is completed, including SAO/CCSAO process using the derived parameters. At 1596, the SAO/CCSAO parameter set and control information are written in the bitstream as well as the compressed non-reference frames.

As an example, SAO/CCSAO gradients (ex: edge classification), bands, and corresponding offsets are derived from collocated CTUs in every picture/slice of the reconstructed non-reference frames stored.

Combination with further in-loop filters

In a variant, the encoder design may comprise a further step where a subsequent loop filter or a plurality of subsequent loop filters (e.g. ALF/CCALF) are derived from the same reconstructed non-reference frames stored, as described in [JVET-AI0280], before storing filtered pictures in the decoded picture buffer.

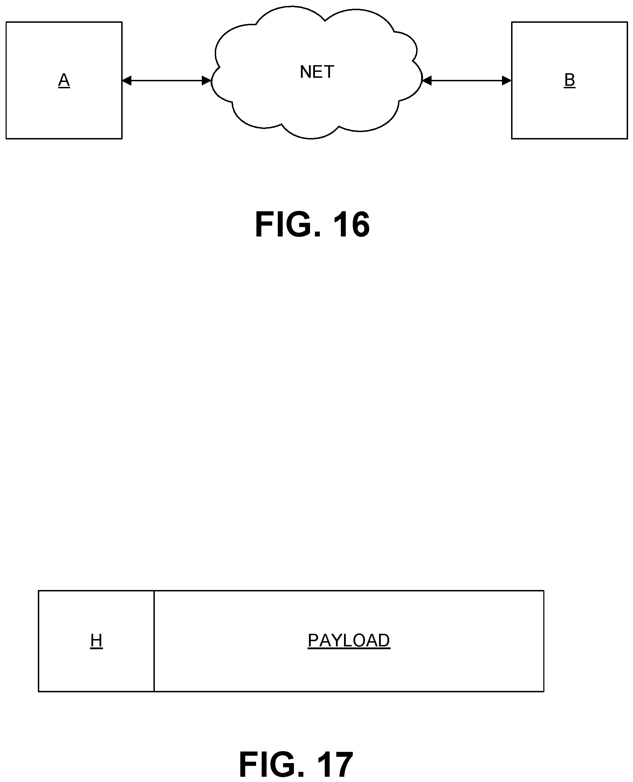

In an embodiment, illustrated in FIG. 16, in a transmission context between two remote devices A and B over a communication network NET, the device A comprises a processor in relation with memory RAM and ROM which are configured to implement a method for encoding a video according to any one of the embodiments described herein and the device B comprises a processor in relation with memory RAM and ROM which are configured to implement a method for decoding a video according to any one of the embodiments described herein. In accordance with an example, the network is a broadcast network, adapted to broadcast/transmit a coded video from device A to decoding devices including the device B.

FIG. 17 shows an example of the syntax of a signal transmitted over a packet-based transmission protocol. Each transmitted packet P comprises a header H and a payload PAYLOAD. In some embodiments, the payload PAYLOAD may comprise coded data representative of a video encoded according to any one of the embodiments described above. The payload can also comprise any signaling as described above. For example, the signal comprises an indication for at least one block of a current picture of the video, the indication indicating that Sample Adaptive Offset (SAO) control information relating to one or more component of the at least one block is obtained from SAO control information of a previous decoded picture.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

   i. Encoding, into coded video data, syntax elements that can enable the decoder to decode the coded video data, according to any of the embodiments described herein.

   ii. A bitstream that includes one or more of the described syntax elements, or variations thereof, whether transmitted, stored, or otherwise made available.

   iii. Creating, transmitting, receiving, and/or decoding of the bitstream.

   iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.  A method comprising:

    determining whether Sample Adaptive Offset (SAO) control information relating to one or more component of at least one block of a current picture of a video is obtained from SAO control information of a previous decoded picture of the video,
    obtaining SAO control information for the at least one block based on the determining, and
    filtering the one or more component of the at least one block based on the obtained SAO control information.

2.  The method of claim 1, wherein determining whether SAO control information relating to one or more component of the at least one block is obtained from SAO control information of a previous decoded picture comprises decoding an indication indicating that SAO control information relating to one or more component of the at least one block is obtained from SAO control information of a previous decoded picture,
    and wherein obtaining SAO control information for the at least one block is based on the indication.

3.  The method of claim 1, wherein determining whether Sample Adaptive Offset (SAO) control information relating to one or more component of the at least one block is obtained from SAO control information of a previous decoded picture is based on whether the current picture is a non-reference picture.

4.  The method of claim 1 or 3, further comprising encoding an indication indicating that SAO control information relating to one or more component of the at least one block is obtained from SAO control information of a previous decoded picture.

5.  The method of claim any one of claims 1-4, wherein the current picture is a non-reference picture.

6.  The method of any one of claims 2 or 4, wherein the indication comprises a flag signaled at a picture or slice level of the current picture.

7.  The method of any one of claims 1-6, wherein a temporal level of the previously decoded picture is lower than or equals a temporal level of the current picture.

8.  The method of any one of claims 2, 4 or 6, wherein the indication comprises a merge index signaled at a block level of the current picture, the merge index indicating an SAO candidate among a set of SAO candidates including at least one SAO candidate obtained from the previous decoded picture.

9.  The method of claim 8, wherein the set of SAO candidates includes at least one of a collocated block in the previous decoded picture, a top block of the collocated block in the previous decoded picture, a left block of the collocated block in the previous decoded picture, a bottom block of the collocated block in the previous decoded picture, a right block of the collocated block in the previous decoded picture, a top left block of the collocated block in the previous decoded picture, a top right block of the collocated block in the previous decoded picture, a bottom left block of the collocated block in the previous decoded picture, a bottom right block of the collocated block in the previous decoded picture.

10. The method of claim 9, wherein the set of SAO candidates includes at least one of a spatial neighboring block above the block or a spatial neighboring block left to the block.

11. The method of any one of claims 2, 4 or 6, the indication comprises an index identifying a block in the previous decoded picture.

12. The method of any one of claims 2, 4 or 6, wherein the indication comprises a frame index indicating the previous decoded picture among a list of reference pictures and a block index identifying a block in the previous decoded picture.

13. The method of any one of claims 1-12, wherein SAO control information obtained comprises at least one of a SAO mode type, a SAO edge class, a SAO band position SAO, SAO offset values, SAO offset signs.

14. The method of claim 13, wherein SAO control information obtained comprises at least one of a SAO merge mode, a SAO merge left flag, a SAO merge up flag.

15. An apparatus comprising one or more processors configured to implement the method according to any one of claims 1-14.

**FIG. 1**

FIG. 2

EP 4 723 626 A1

**FIG. 3**

Prediction

Residue

DBF → SAO → ALF → Reference Picture Buffer

## FIG. 4

Samples from DBF

SAO    BIF    CCSAO

+

clip

Samples to ALF

## FIG. 5

| EdgeIdx | Condition | Meaning |
|---|---|---|
| 0 | $p = n_0$ and $p = n_1$ | flat area |
| 1 | $p < n_0$ and $p < n_1$ | local min |
| 2 | $p < n_0$ and $p = n_1$ or $p < n_1$ and $p = n_0$ | edge |
| 3 | $p > n_0$ and $p = n_1$ or $p > n_1$ and $p = n_0$ | edge |
| 4 | $p > n_0$ and $p > n_1$ | local max |

$\tau O\_0$    $\tau O\_90$    $\tau O\_135$    $\tau O\_45$

category 1    category 2

*Positive offset*

category 3    category 4

*Negative offset*

FIG. 6

Starting band position

Minimum pixel value

Signal four offsets from starting band

Maximum pixel value

FIG. 7

23

**FIG. 8**

Collocated & neighboring Y          Collocated U          Collocated V

**FIG. 9**

**FIG. 10**

1100

Obtain SAO control
information for a
block  ⟋1110

↓

Apply SAO to the
block  ⟋1120

↓

Encode indication
for SAO control
information  ⟋1130

**FIG. 11**

1200

Decode indication of
SAO control
information  ⟋1210

↓

Obtain SAO control
information for a
block from a
temporal block  ⟋1220

↓

Apply SAO to the
block  ⟋1230

**FIG. 12**

1300

⟋1310

Yes          Reuse control          No
             information?

Fetch stored
control information
from previous
picture  ⟋1330

Encode/Decode
control
information  ⟋1320

Reconstructed samples from
DBF
⟋1340

SAO/CCSAO

↓

SAO/CCSAO output

**FIG. 13**

1400

1410
Is
current picture eligible for
reusing control information
?

Yes          No

1420
Read
reuse_info
flag

Yes          No

1450
Stored
control information
from previous
picture

1440
Fetch control
information

1430
Decode control
information in
bitstream

Reconstructed
samples from
DBF

1460
SAO/CCSAO
process

Output
samples

1470
Shall
current picture store current
control information
?

Yes          No

1480
Store control
information

1490
Exit

## FIG. 14

FIG. 15

A ⟷ NET ⟷ B

# FIG. 16

| H | PAYLOAD |
|---|---------|

# FIG. 17

| | Europäisches Patentamt European Patent Office Office européen des brevets | **EUROPEAN SEARCH REPORT** | **Application Number** EP 24 30 6622 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/348222 A1 (HSIANG SHIH-TA [TW] ET AL) 27 November 2014 (2014-11-27) * figures 12, 13 * * page 13, line 11 - line 16 * * page 19, line 19 - line 26 * * page 21, line 10 - line 15 * * page 50, line 25 - line 31 * * page 37, line 7 - line 10 * ----- | 1-15 | INV. H04N19/117 H04N19/176 H04N19/463 H04N19/82 |
| X | WO 2019/233998 A1 (CANON KK [JP]; CANON EUROPE LTD [GB]) 12 December 2019 (2019-12-12) * figure 20 * * paragraph [0005] - paragraph [0006] * * paragraph [0051] - paragraph [0052] * ----- | 1-15 | |
| | | | TECHNICAL FIELDS SEARCHED (IPC) H04N |

The present search report has been drawn up for all claims

| Place of search | Date of completion of the search | Examiner |
|---|---|---|
| Munich | 26 February 2025 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 723 626 A1

## ANNEX TO THE EUROPEAN SEARCH REPORT
## ON EUROPEAN PATENT APPLICATION NO.

EP 24 30 6622

This annex lists the patent family members relating to the patent documents cited in  the above-mentioned European search report.
The members are as contained in the European Patent Office EDP file on
The European Patent Office is in no way liable for these particulars which are merely given for the purpose of information.

26-02-2025

| Patent document cited in search report | Publication date | Patent family member(s) | Publication date |
|---|---|---|---|
| US 2014348222 A1 | 27-11-2014 | NONE | |
| WO 2019233998 A1 | 12-12-2019 | GB 2574422 A | 11-12-2019 |
| | | TW 202005371 A | 16-01-2020 |
| | | WO 2019233998 A1 | 12-12-2019 |

EPO FORM P0459

For more details about this annex : see Official Journal of the European Patent Office, No. 12/82

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. KARCZEWICZ et al.** VVC In-Loop filters. *IEEE Transactions on Circuits and Systems for Video Technology*, October 2021, vol. 31 (10)
- **C. -M. FU et al.** Sample Adaptive Offset in the HEVC Standard. *IEEE Transactions on Circuits and Systems for Video Technology*, December 2012, vol. 22 (12)

- **C.-W. KUO et al.** *AHG12: Cross-component Sample Adaptive Offset, JVET-V0153*
- **C.-W. KUO et al.** AHG12: CCSAO with extended edge classifiers and history offsets. *JVET-AD0218*
- **M. KARCZEWICZ et al.** Non-EE2: Reuse of ALF control information. *JVET-AI0280*